# EUROPÄISCHE PATENTSCHRIFT

(11) **EP 1 698 561 B1**
(45) Veröffentlichungstag und Bekanntmachung des Hinweises auf die Patenterteilung: **10.12.2008**
(21) Anmeldenummer: 06002176.3
(22) Anmeldetag: 02.02.2006
(51) Int. Cl.: B65D 35/10, B65D 35/12, B29D 23/20

(54) **Verfahren zur Herstellung einer Tube**
Method for producing a tube
Procédé de fabrication d'un tube

(30) Priorität: 01.03.2005 DE 102005009382
(43) Veröffentlichungstag der Anmeldung: 06.09.2006
(73) Patentinhaber: Kunststoffwerk Kutterer GmbH & Co. KG, 76189 Karlsruhe (DE)
(72) Erfinder: Schorner, Horst, 75203 Königsbach-Stein (DE)
(74) Vertreter: Wallinger, Michael

(56) Entgegenhaltungen:
- DE-U1- 8 407 074
- FR-A- 2 784 657
- US-A- 3 260 777
- US-A- 5 292 034
- JOHANNABER/MICHAELI: "Handbuch Spritzgiessen" 2002, CARL HANSER VERLAG , MÜNCHEN WIEN * Seite 527 - Seite 529 *

## Beschreibung

Die Erfindung betrifft ein Verfahren zur Herstellung einer mit einer Sperrschicht versehenen Tube.

Tuben dienen in den unterschiedlichsten. Anwendungsgebieten als Behälter für die Aufnahme von gel-artigen oder pastorösen Produkten oder dergleichen. So werden beispielsweise in Tuben diverse Lebensmittel verpackt, wie beispielsweise Mayonnaise, Senf, Tomatenmark oder dergleichen. Auch im Bereich der Kosmetik und Körperpflege werden Tuben als Behältnisse eingesetzt. So werden Tuben beispielsweise zur Aufnahme von Zahnpasta, Cremes und dergleichen verwendet. Darüber hinaus werden Tuben im Bereich der Arzneimittel eingesetzt, um mit pharmazeutischen Wirkstoffen versetzte Cremes oder Gels aufzunehmen.

Tuben weisen in aller Regel eine von einer umfangsmäßig geschlossenen Wand gebildete Tubenschultereinrichtung auf, sowie einen sich hieran axial anschließenden Tubenmantel. Der der Schultereinrichtung abgewandte Bodenbereich der Tube kann beispielsweise kreisförmig ausgebildet sein. Bekannt ist zum Beispiel, dass der Mantelbereich mit einer derartigen kreisförmigen Platte umfangsmäßig umgebördelt oder verschweißt oder gefalzt ist. Ferner ist bekannt, dass das im Bodenbereich angeordnete freie Ende des Tubenmantels selbst eine Art Bodenbereich ausbildet, in dem die gegenüberliegend angeordneten Abschnitte unter Bildung einer Art Streifens aneinander liegen. Bekannt ist beispielsweise, dass dies so ist, dass das freie Ende umgebördelt oder umgefalzt ist oder verschweißt ist.

Die Tubenschultereinrichtung weist eine Tubenschulter auf, sowie einen Tubenhals. Im Tubenhals ist auf der der Schulter abgewandten Seite eine Öffnung zur Ausgabe des in der Tube befindlichen Mediums vorgesehen. Der Tubenhals ist in der Regel so ausgebildet, dass er einen Deckel aufnehmen kann. Dies kann beispielsweise so sein, dass der Tubenhals mit einem Außengewinde versehen ist, in welchen das Innengewinde eines Deckels verschraubt werden kann. Grundsätzlich ist aber auch möglich, dass hier ein anderer Deckel als ein Schraubdeckel aufgenommen werden kann, wie beispielsweise ein Deckel, der dort einschnappt.

Der Bereich mit dem Tubenhals und der Tubenschulter und gegebenenfalls einem Ansatz des Tubenmantels wird im Stand der Technik gelegentlich auch als Tubenschulter bezeichnet.

Bekannt ist femer, dass Tuben aus Aluminium bestehen können. Dabei ist in aller Regel vorgesehen, dass die Tube - und insbesondere der Tubenmantel - innen und außen mit einem Lack versehen sind. Derartige Aluminiumtuben weisen meistens einen Kunststoffdeckel auf.

Bekannt geworden sind ferner Tuben aus Kunststoff. Bei diversen Kunststoffen besteht allerdings die Gefahr, dass die in der Tube aufbewahrten Medien durch den Kunststoff hindurch diffundieren können bzw. die Kunststoffe nicht hinreichend flüssigkeitsdicht sind. Dies kann - zumindest über längere Zeit bei längerer Lagerung - zu einem Austrocknen des Mediums führen.

Nicht zuletzt aus diesem Grunde werden daher häufiger Laminattuben eingesetzt. Bekannt sind beispielsweise Tuben, die aus Alulaminat (Aluminum Barrier Laminates (ABL)) oder aus Kunststoff-Laminat (Plastic Barrier Laminates (PBL)) hergestellt werden. Dabei wird in der Regel zunächst eine Laminatfolie erzeugt, die eine Sperrschicht aufweist. Dies kann beispielsweise eine Sperrschicht aus Aluminium sein, oder eine Sperrschicht aus Ethylenvinylalkohol (EVOH). Zur Herstellung des Tubenmantels wird anschließend das Laminat auf Maß geschnitten und in kleinere Rollen gewickelt. Anschließend wird das Laminat gegebenenfalls bedruckt. Hinterher wird das Laminat abgerollt und anschließend in Form gebracht, also umfangsmäßig geschlossen angeordnet. Danach wird das Laminat verschweißt. Für ABL-Laminate wird in der Regel das Hochfrequenzschweißen verwendet, während PBL-Laminate in der Regel thermisch verschweißt werden. Danach wird die Tube auf Länge geschnitten. Danach wird die Tubenschulter bzw. Tubenschultereinrichtung auf das Laminat bzw. am Tubenmantel verschweißt. Dabei kann beispielsweise für ABL-Laminate und Rondelle das Hochfrequenzschweißen eingesetzt werden und für PBL-Laminate das Heißluftschweißen.

Die Herstellung der Tubenschultereinrichtungen ist mittels Laminaten allerdings nicht so einfach, wie die der Tubenmäntel. Nicht zuletzt aus diesem Grunde wird in die Tubenschultereinrichtung häufig ein Einsatz bzw. sogenannter "Insert" eingesetzt. Bei anderen Gestaltungen wird auf die Tubenschultereinrichtung außen einen Rondelle aufgesetzt. Die Inserts können beispielsweise aus Acrylnitril-Butadien-Styrol (ABS) bzw. aus URIA sein.

In der DE 44 049 70 C1 wird vorgeschlagen, zur Herstellung der Tubenschulter- bzw. Tubenschultereinrichtung 0,5 bis 1,0 Gewichtsprozent Ethylenvinylalkohol mit 99,5 bis 99 Gewichtsprozent Polyethylen zu vermischen und unter Druck- und Wärmezufuhr in einem Schneckenextruder zu plastifizieren. Dabei soll am Ende des Plastifizierungsvorgangs sich der Ethylenvinylalkohol lamellen- bzw. schlierenartig in Polyethylen verteilt haben. Die Temperaturgrenze bei der Herstellung soll dabei unterhalb der Temperatur liegen, auf die die Materialien gebracht werden müssen, um spritztechnisch verarbeitet zu werden. Ebenfalls bei dieser Temperatur soll dann anschließend die plastifizierte Mischung mittels einer Form durch Pressen zu einer Schulter umgeformt werden. Die Berührungsbereiche zwischen dem Tubenmantel und der Tubenschulter sollen miteinander verschweißt werden.

Der Erfindung liegt die Aufgabe zugrunde, eine Tube mit Sperrschicht zu schaffen, die betriebssicher ist und sich auf einfache Weise herstellen lässt, sowie ein einfaches Verfahren zur Herstellung einer betriebssicheren, mit Sperrschicht versehenen Tube.

Die Erfindung stellt ein Verfahren zur Herstellung einer Tube gemäß Anspruch 1 zur Verfügung.

Es wird ebenfalls eine Tubenschultereinrichtung für Tuben vorgeschlagen. Die Tubenschultereinrichtung weist eine umfangsmäßig geschlossene Wand auf. Diese umfangsmäßig geschlossene Wand der Tubenschultereinrichtung bildet eine Tubenschulter und einen Tubenhals aus. Die umfangsmäßig geschlossene Wand der Tubenschultereinrichtung wird radial innen durch ihre Innenoberfläche und radial außen durch ihre Außenoberfläche begrenzt. Die umfangsmäßig geschlossene Wand der Tubenschultereinrichtung weist unterschiedliche Materialien auf. Eines dieser unterschiedlichen Materialien ist ein erstes Material, wie insbesondere Sperrmaterial. Das erste Material kann beispielsweise Ethylenvinylalkohol (EVOH) sein. Es ist vorgesehen, dass eine aus diesem ersten Material bzw. Sperrmaterial bestehende Sperrschicht in die umfangsmäßig geschlossene Wand der Tubenschultereinrichtung bzw. in ein anderes Material dieser Wand eingespritzt ist. Dabei ist insbesondere vorgesehen, dass diese Schicht Bestandteil der umfangsmäßig geschlossenen Wand der Tubenschultereinrichtung ist, bzw. das erste Material bzw. Sperrmaterial, eines der unterschiedlichen Materialien der umfangsmäßig geschlossenen Wand der Tubenschultereinrichtung ist. In bevorzugter Ausgestaltung ist diese Tubenschultereinrichtung im Sandwich-Spritzgußverfahren hergestellt. Im Rahmen dieses Sandwich-Spritzgußverfahrens kann insbesondere die Schicht aus dem ersten Material bzw. Sperrschicht eingespritzt worden sein.

Aus der FR-A-2 784 657 ist eine derartige Tubenschultereinrichtung bekannt, die jedoch durch simultanes Einspritzen der ersten und zweiten Materialien auf einer konventionellen Maschine hergestellt wird.

Ferner wird insbesondere eine Tubenschultereinrichtung vorgeschlagen, die eine Sperrschicht aufweist, die so ausgebildet ist, dass im Wesentlichen jede radial verlaufende Strecke, die zwischen der Innenoberfläche und der Außenoberfläche der umfangsmäßig geschlossenen Wand der Tubenschultereinrichtung durch die Sperrschicht verläuft, diese Sperrschicht im Wesentlichen genau einmal schneidet. Radial bezieht sich dabei insbesondere auf die radiale Richtung der umfangsmäßig geschlossenen Wand der Tubenschultereinrichtung.

In bevorzugter Gestaltung ist die Sperrschicht ebenfalls umfangsmäßig geschlossen. Insbesondere bei einer solchen Gestaltung würde eine radiale Gerade, die durch die Sperrschicht verläuft, die Sperrschicht zweimal schneiden, nämlich jeweils einmal im Bereich von gegenüberliegenden Wandabschnitten der umfangsmäßig geschlossenen Wand der Tubenschultereinrichtung. Dies ist eine bevorzugte Gestaltung. Auch bei dieser Gestaltung wird allerdings zwischen der (jeweiligen) Innenoberflächen und der (jeweiligen) Außenoberfläche der gegenüberliegenden Wandabschnitte die radiale Gerade jeweils bzw. eine radiale hier verlaufende (gedachte) Strecke die Sperrschicht genau einmal schneiden.

Es sei angemerkt, dass Vorgesagtes, was sich auf ein Schneiden der Sperrschicht bezieht, insbesondere ungeachtet von etwaigen "Verunreinigungen", zu sehen ist. In besonders bevorzugter Gestaltung ist vorgesehen, dass auch hier die Sperrschicht eingespritzt ist bzw. die Tubenschultereinrichtung im Sandwich-Spritzgußverfahren hergestellt ist. Dabei lässt es sich nicht immer vermeiden, dass das eingespritzte Material zumindest teilweise, beispielsweise zur Außenoberfläche dringt oder Abschnitte ausbildet, die aus der eigentlichen Schicht bzw. Sperrschicht herausragen. Die Ausführungen zu der vorgenannten Strecke bzw. Geraden bzw. zum Schneiden der Sperrschicht beziehen sich also insbesondere auf die "eigentliche Sperrschicht".

In vorteilhafter Gestaltung ist vorgesehen, dass die Sperrschicht im Wesentlichen vollständig im Inneren der umfangsmäßig geschlossenen Wand der Tubenschultereinrichtung liegt. Auch in Bezug auf diese Gestaltung sei allerdings angemerkt, dass es bei der Herstellung, insbesondere dann, wenn das Sandwich-Spritzgußverfahren angewendet wird bzw. die Sperrschicht eingespritzt wird, zu gewissen "Verunreinigungen" kommen kann, also Sperrmaterial so gedrückt wird, dass es sich außerhalb der eigentlichen Sperrschicht befindet und gegebenenfalls bis zur Innen- oder Außenoberfläche der umfangsmäßig geschlossenen Wand der Tubenschultereinrichtung ragt. Diese Bereiche sind insbesondere nicht als solche zu sehen, die die eigentliche Sperrschicht bilden.

Es ist insbesondere vorgesehen, dass die umfangsmäßig geschlossene Wand der Tubenschultereinrichtung aus Vollmaterial ist. Dies ist insbesondere so, dass an jeder Stelle der Zwischenraum zwischen der Innenoberfläche und der Außenoberfläche vollständig mit Material ausgefüllt ist, also insbesondere keine Hohlräume ausgebildet werden. Die umfangsmäßig geschlossene Wand der Tubenschultereinrichtung, und insbesondere eine solche, die aus Vollmaterial besteht, bildet in bevorzugter Gestaltung einen Durchgangskanal aus. Dieser Durchgangskanal kann so sein, dass an dem einen Ende eine Öffnung vorgesehen ist, die für die Ausgabe von Medium bestimmt ist, und an dem anderen Ende ein offener Bereich vorgesehen ist, der im Behälterinneren liegt, wenn eine derartige Tubenschultereinrichtung mit einem Tubenmantel zur Bildung einer Tube verbunden wird.

Die Ausgabeöffnung ist dabei insbesondere am Tubenhals angeordnet, und zwar im axial der Tubenschulter abgewandten Ende. In bevorzugter Gestaltung ist vorgesehen, dass die Sperrschicht so angeordnet ist, dass die umfangsmäßig geschlossene Wand der Tubenschultereinrichtung im quer zu ihrer Längsrichtung gesehenen Querschnitt an den Stellen, wo die Sperrschicht vorgesehen ist, quasi drei Schichten im Querschnitt ausbildet. Dabei kann vorgesehen sein, dass eine radial innenliegende Schicht dieser drei Schichten aus einem vom Sperrmaterial verschiedenen zweiten Material vorgesehen ist, und eine radial außenliegende Schicht dieser drei Schichten ebenfalls aus einem Material besteht, das vom Sperrmaterial verschieden ist. In bevorzugter Gestaltung ist vorgesehen, dass sowohl die innen gebildete Schicht als auch die außen gebildete Schicht jeweils aus dem gleichen Material, insbesondere dem zweiten Material, besteht. In weiter bevorzugter Gestaltung ist vorgesehen, dass die Sperrschicht im Wesentlichen vollständig von dem zweiten Material eingehüllt ist. Auch hierzu ist anzumerken, dass die bereits oben angesprochenen "Verunreinigungen" - sofern sie vorhanden sind - dabei selbstverständlich außer Acht bleiben. Dies vollständige Einhüllen ist also insbesondere so, dass die Sperrschicht, bezogen auf die umfangsmäßig geschlossene Wand der Tubenschultereinrichtung, nach radial innen und nach radial außen vollständig an zweites Material grenzt und axial an beiden Enden der Sperrschicht vollständig zweites Material vorgesehen ist bzw. an die Sperrschicht - insbesondere axial - angrenzt. Grundsätzlich ist es allerdings auch möglich, dass zumindest eines der axialen Enden so ist, dass die Sperrschicht zur dort in Axialrichtung gelegenen Außenoberfläche der umfangsmäßig geschlossenen Wand der Tubenschultereinrichtung reicht.

Es ist also insbesondere vorgesehen, dass die Sperrschicht in der zur Außenoberfläche der umfangsmäßig geschlossenen Wand der Tubenschultereinrichtung gelegenen Richtung vollständig jeweils an zweites Material grenzt, und die Sperrschicht in der zu ihrer Innenoberfläche gerichteten Seite vollständig an zweites Material grenzt. Anzumerken ist hierbei, dass hiermit natürlich die benachbarte Innenoberfläche bzw. benachbarte Au-βenoberfläche gemeint ist, und nicht die Oberflächen des gegenüberliegenden Wandabschnitts der umfangsmäßig geschlossenen Wand der Tubenschultereinrichtung.

Es kann vorgesehen sein, dass der Bereich, der radial zwischen der Sperrschicht und der Innenoberfläche der umfangsmäßig geschlossenen Wand der Tubenschultereinrichtung gelegen ist, im Wesentlichen vollständig vom zweiten Material gebildet wird. Weiter kann vorgesehen sein, und zwar insbesondere in Kombination mit der vorgenannten Gestaltung, dass der zwischen der Sperrschicht und der Außenoberfläche der umfangsmäßig geschlossenen Wand der Tubenschultereinrichtung radial gelegene Bereich vollständig von zweitem Material gebildet wird. Auch hier ist anzumerken ist, dass gegebenenfalls gewisse "Verunreinigungen" bei der Herstellung auftreten können auftreten können.

Besonders vorteilhaft kann sein, dass die Tubenschultereinrichtung aus zwei Komponenten besteht. Eine erste Komponente kann das erste Material bzw. das Sperrmaterial sein, und eine zweite Komponente kann das zweite Material sein. Das zweite Material ist vorzugsweise so, dass es mehr Feuchtigkeit durchlässt als das erste Material, bzw. mehr Medium oder Feuchtigkeit in dieses Material hineindiffundieren kann, als in das erste Material bzw. Sperrmaterial. Besonders bevorzugt ist allerdings vorgesehen, dass das erste Material bzw. Sperrmaterial im Wesentlichen undurchlässig für Feuchtigkeit ist bzw. so ist, dass kein Medium oder Feuchtigkeit hier hineindiffundieren kann.

Das zweite Material kann beispielsweise ein Kunststoff sein, wie beispielweise Polyethylen (PE). Es kann vorgesehen sein, dass die Sperrschicht bzw. das Sperrmaterial im Wesentlichen vollständig zusammenhängend ausgebildet ist, bzw. eine zusammenhängende Sperrschicht ausbildet. Auch diesbezüglich sei noch einmal darauf hingewiesen, dass etwaige bei der Herstellung entstehende "Verunreinigungen" - sofern sie hier gegeben sind - hierbei außer Acht bleiben.

Die Sperrschicht ist in vorteilhafter Gestaltung umfangsmäßig geschlossen. Es kann vorgesehen sein, dass die Sperrschicht umfangsmäßig geschlossen ist und im Wesentlichen dem Wandverlauf der umfangsmäßig geschlossenen Wand der Tubenschultereinrichtung folgt, und zwar insbesondere auch in axialer Richtung. Die Sperrschicht kann beispielsweise so sein, dass sie sich annähernd entlang der gesamten (axialen) Länge dieser umfangsmäßig geschlossenen Wand erstreckt. Dies kann zum Beispiel so sein, dass sie eine Art umfangsmäßig geschlossene Hülle ausbildet, die entlang ihrer gesamten axialen Länge umfangsmäßig geschlossen ist. Es kann auch vorgesehen sein, dass die in Längsrichtung gelegenen axialen Enden der Sperrschicht vom zweiten Material umgeben sind.

Die Tubenschultereinrichtung kann im Bereich des Tubenhalses beispielsweise ein Au-βengewinde aufweisen, dass zur Aufnahme eines Schraubdeckels dient. Es kann vorgesehen sein, dass die Tubenschultereinrichtung einen Absatz bzw. eine Stufe im Bereich seiner Schulter aufweist. Diese Stufe bzw. dieser Absatz ist insbesondere umfangsmä-βig geschlossen, und vorzugsweise konzentrisch zur Längsachse der umfangsmäßig geschlossenen Wand der Tubenschultereinrichtung.

Im Rahmen der Offenbarung wird auch eine Tube mit einer Tubenschultereinrichtung der vorgenannten Art vorgeschlagen. Dabei ist insbesondere vorgesehen, dass die Tube einen Tubenmantel aufweist, der mit der Tubenschultereinrichtung fest verbunden ist. Diese feste Verbindung wird durch Verschweißen erzeugt. Der Tubenmantel kann beispielsweise aus Laminat hergestellt sein, welches eine Sperrschicht aufweist. Beispielsweise kann der Tubenmantel aus Polyethylen (PE) und einer Sperrschicht gebildet sein. Die Sperrschicht kann beispielsweise eine Aluminium-Sperrschicht sein oder eine Sperrschicht aus Ethylenvinylalkohol (EVOH). Es kann vorgesehen sein, dass die angesprochene Sperrschicht des Tubenmantels innen Laminats gelegen ist, so dass sie eine innere Schicht des Laminats bildet, und beidseits dieser Sperrschicht eine Haftvermittlerschicht (HVM) vorgesehen ist. Bezogen auf den Tubenmantel radial außerhalb der einen, radial weiter außengelegenen, Haftvermittlerschicht kann beispielsweise eine Schicht aus Polyethylen vorgesehen sein, und radial innerhalb der anderen, radial weiter innen gelegenen Haftvermittlerschicht kann beispielsweise ebenfalls eine Schicht aus Kunststoff, wie z.B. Polyethylen (PE), vorgesehen sein. Insbesondere kann dabei vorgesehen sein, dass diese beiden Kunststoff-Schichten bzw. Polyethylen Schichten jeweils außen gelegen sind, und zwar insbesondere - in Bezug auf den Tubenmantel - einerseits radial innen und andererseits radial außen. Ein Verschweißung des Tubenmantels mit der Tubenschultereinrichtung wurde ebenfalls bereits in der FR-A-2 784 657 vorgeschlagen.

Der Boden der Tube kann beispielsweise gebördelt oder verklebt oder verschweißt sein. Er kann auch so ausgebildet sein, dass dort ein kreisscheibenförmiger Boden vorgesehen ist. Es kann aber auch vorgesehen sein, dass die freien Enden des Tubenmantels zusammengedrückt und dann entsprechend verschweißt, gefalzt oder dergleichen sind.

Erfindungsgemäß wird insbesondere ein Verfahren gemäß Anspruch 1 vorgeschlagen. Es ist also insbesondere vorgesehen, dass eine Tubenschultereinrichtung im Sandwich-Spritzgußverfahren hergestellt wird und dabei eine Sperrschicht erzeugt wird. Diese Sperrschicht ist insbesondere eine Sperrschicht, die im Inneren einer umfangsmäßig geschlossenen Wand der Tubenschultereinrichtung ausgebildet wird. Diese Sperrschicht kann beispielsweise so gelegen und / oder ausgebildet sein, wie es bereits zuvor erwähnt wurde bzw. im Rahmen dieser Offenbarung in Bezug auf Tubenschultereinrichtungen erläutert wird.

Ein Spritzkopf ist so ausgestaltet, dass er zwei Nadeln aufweist, die jeweils geöffnet und geschlossen werden können. Diese beiden Nadeln sind zur Ausgabe von unterschiedlichen Materialien bestimmt. Es kann so sein, dass diese beiden Nadeln konzentrisch zueinander angeordnet sind.

Die Spritzgussform ist dabei insbesondere so, dass sie eine Negativkontur der herzustellenden Tubenschultereinrichtung ausbildet. Die Tubenschultereinrichtung kann dabei beispielsweise so sein, wie es im Rahmen dieser Offenbarung - insbesondere in Bezug auf erfindungsgemäße Tubenschultereinrichtungen - erläutert wird, so dass die Spritzgussform entsprechend eine entsprechende Negativkontur aufweist. Dabei ist insbesondere vorgesehen, dass ein Bereich vorgesehen ist, über welchen das Spritzgussmaterial in die Form eingebracht werden kann. Zunächst wird ein zweites Material in die Spritzgussform eingespritzt. Beispiele für ein zweites Material werden bereits an anderer Stelle dieser Offenbarung erläutert. Insbesondere kann das zweite Material also Polyethylen (PE) sein. Für dieses Einspritzen des zweiten Materials wird insbesondere eine zweite Nadel des Spritzkopfs geöffnet. Die erste Nadel, durch welche das erste Material ausgegeben werden kann, ist dabei geschlossen.

Nach dem Einspritzen des zweiten Materials ist insbesondere vorgesehen, dass die zweite Nadel wieder geschlossen wird bzw. hierdurch das Spritzen beendet wird. Anschließend wird ein erstes Material in die Spritzgussform eingespritzt. Dies erfolgt insbesondere so, dass sich innerhalb des zweiten Materials eine Schicht aus diesem ersten Material ausbildet. Das erste Material ist dabei insbesondere ein Sperrmaterial, so dass die sich ausbildende Schicht aus zweitem Material eine Sperrschicht ist. Das Einspritzen des ersten Materials bzw. Sperrmaterials erfolgt insbesondere so, dass dieses Sperrmaterial in einen innenliegenden Bereich des zweiten Materials eingespritzt wird. Im innenliegenden Bereich kühlt sich das zweite Material langsamer ab als an seinen außengelegenen Stellen. Dies kann ausgenutzt werden, so dass das erste Material innenliegend das zweite Material verdrängt und nach außen drückt, so dass sich die entsprechende Sperrschicht ausbildet. Es kann vorgesehen sein, dass das Spritzgussverfahren danach beendet wird, was beispielsweise dadurch erfolgen kann, dass die erste Nadel, mit der das erste Material eingespritzt wurde, geschlossen wird und gegebenenfalls der Spritzkopf entfernt wird.

Gemäß einer Weiterbildung ist allerdings vorgesehen, dass das Verfahren noch nicht beendet wird, sondern vielmehr anschließend erneut zweites Material in die Spritzgussform eingespritzt wird. Insbesondere kann vorgesehen, dass zunächst die erste Nadel geschlossen wird, bzw. das Einspritzen des ersten Materials beendet wird, und anschließend die zweite Nadel geöffnet wird und zweites Material eingespritzt wird. Dies zweite Material kann dabei insbesondere zu dem Zweck eingespritzt werden, damit die Sperrschicht im Wesentlichen vollständig vom zweiten Material umgeben ist bzw. in dieses eingehüllt ist. Das zweite Material dient also insbesondere der Bildung einer Randsicht, und das erste Material dient der Bildung einer Kernschicht bzw. Sperrschicht.

Nach diesem erneuten Einspritzen des zweiten Materials kann beispielsweise die zweite Nadel geschlossen werden. Danach kann beispielsweise vorgesehen sein, dass der Spritzkopf entfernt wird. Die Form kann anschließend - insbesondere nach einem gewissen Warten, bis sich das Material hinreichend abgekühlt hat - geöffnet werden, und die Tubenschultereinrichtung kann dann entnommen werden.

Erfindungsgemäß ist vorgesehen, dass zunächst eine mit einer Sperrschicht versehene Tubenschultereinrichtung hergestellt wird und ein eine Sperrschicht aufweisender Tubenmantel getrennt von dieser Tubenschultereinrichtung gefertigt wird, was im übrigen in beliebiger Reihenfolge erfolgen kann. Der Tubenmantel kann beispielsweise auf die Art und Weise gefertigt werden, wie es eingangs erwähnt wurde. Insbesondere kann vorgesehen sein, dass zur Herstellung des Tubenmantels zunächst eine Laminatfolie hergestellt wird, bzw. dass eine solche herangezogen wird. Die Laminatfolie kann beispielsweise so sein, dass sie einen innenliegende Sperrschicht aufweist, die beispielsweise aus Aluminium ist oder aus EVOH ist. Ferner kann vorgesehen sein, dass beidseits dieser Sperrschicht eine Haftvermittlerschicht vorgesehen ist, an welche sich wiederum eine Schicht aus Kunststoff anschließt, wie beispielsweise aus Polyethylen (PE). Aus einer solchen Laminatfolie kann beispielsweise ein im Wesentlichen hohlzylindrischer Mantel gefertigt, der einen Tubenmantel bildet. Dabei kann vorgesehen sein, dass entsprechende Enden miteinander verschweißt werden. Ein entsprechendes Schneiden der Folie auf das Maß, das zur Bildung des gewünschten Umfangsmaßes erforderlich ist, erfolgt selbstverständlich vor dem entsprechenden Verbinden bzw. Verschweißen. Ferner kann ein solcher Tubenmantel auf Länge geschnitten werden. Überdies kann vorgesehen sein, dass ein Ende des Tubenmantels entsprechend verschlossen wird, was beispielsweise durch entsprechendes Falzen oder Bördeln oder Verschweißen erreicht werden kann. Dabei kann vorgesehen sein, dass ein Ende bzw. ein axiales Ende des Tubenmantels umgefalzt bzw. gebördelt wird und/oder entsprechend verschweißt oder auf andere Art und Weise verschlossen wird. Es kann auch vorgesehen sein, dass ein separater Boden mit einem Ende verbunden wird, der beispielsweise rund ausgebildet sein kann und beispielsweise auch aus einem Material wie Polyethylen (PE) oder dergleichen ist.

Vor dem Schließen des Tubenmantels an ein Ende oder danach kann der Tubenmantel mit der Tubenschultereinrichtung verbunden werden. Dies erfolgt mittels Schweißen. Auf diese Art und Weise wird eine Tube ausgebildet, die im Bereich der Tubenschultereinrichtung und im Bereich des Tubenmantels mit einer Sperrschicht versehen ist.

Anzumerken ist, dass dann, wenn ein separater Boden für die Tube verwendet wird, insbesondere auch vorgesehen sein kann, dass dieser mit einer Sperrschicht versehen ist. Ein solcher Tubenboden kann beispielsweise auch aus einer Laminatfolie hergestellt sein. Die Sperrschicht kann beispielsweise so sein, wie es an anderer Stelle dieser Offenbarung offenbart wird, und zwar insbesondere in Bezug auf den Tubenmantel.

Im folgenden sollen nun beispielhafte erfindungsgemäße Gestaltungen anhand der Figuren näher erläutert werden. Anhand dieser Figuren werden auch Vorteile und Wirkungen deutlich, die bei bevorzugten Gestaltungen gegeben sein können. Dabei zeigt:
- Fig. 1: eine beispielhafte erfindungsgemäße Tube in schematischer Ansicht;
- Fig. 2: einen vergrößerten Ausschnitt im Bereich "X" aus Fig. 1;
- Fig. 3: eine beispielhafte Tubeschultereinrichtung in schematischer Ansicht; und
- Fig. 4a bis 4d: in sehr grob schematischer Ansicht vier Gestaltungen, anhand derer ein beispielhaftes erfindungsgemäßes Verfahren erläutert werden soll.

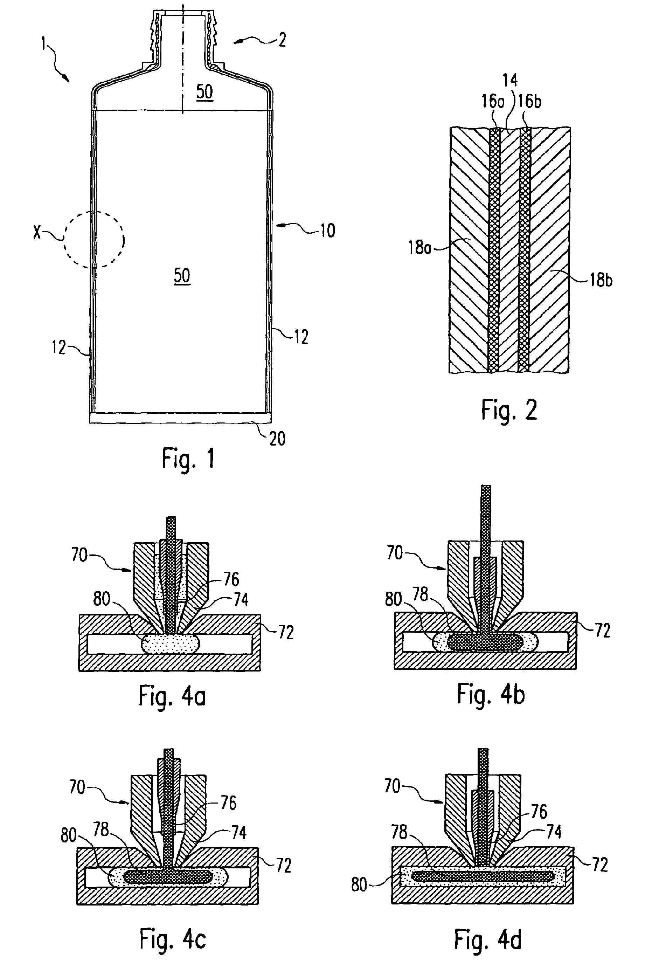

Fig. 1 zeigt eine beispielhafte erfindungsgemäße Tube 1 in schematischer Ansicht. Die Tube 1 weist eine beispielhafte Tubenschultereinrichtung 2 auf, sowie einen Tubenmantel 10. Der Tubenmantel 10 bildet eine Wand 12 aus, die umfangsmäßig geschlossen ist. Der Tubenmantel 10 bzw. die Wand des Tubenmantels 10 weist eine Sperrschicht 14 auf. Beidseits der Sperrschicht 14 ist eine Haftvermittlerschicht 16a, 16b vorgesehen. Auf der der Sperrschicht 14 abgewandten Seite der Haftvermittlerschicht 16a schließt sich eine Schicht aus Kunststoff, vorzugsweise aus Polyethylen (PE), an. Diese Schicht ist mit 18a bezeichnet. Auf der der Sperrschicht 14 abgewandten Seite der Haftvermittlerschicht 16b schließt sich ebenfalls eine Schicht aus Kunststoff, insbesondere aus Polyethylen (PE) an, die hier mit dem Bezugszeichen 18b versehen ist. Der Tubenmantel 10 kann beispielsweise aus einer entsprechenden Laminatfolie hergestellt sein. Die Haftvermittlerschichten 16a, 16b können beispielsweise aus EVOH oder aus Aluminium sein.

Am der Tubenschultereinrichtung 2 abgewandten Ende der Tube 1 ist ein Boden 20 vorgesehen. Dieser Boden 20 wird hier dadurch ausgebildet, dass die Mantelwand 12 an ihrem einen Ende übereinander gelegt und umgefalzt bzw. umgebördelt bzw. verschweißt wurde. Stattdessen kann aber auch vorgesehen sein, dass hier ein beispielsweise kreisförmiger Boden eingesetzt und entsprechend mit dem Tubenmantel 10 verbunden ist, was beispielsweise durch Schweißen oder durch ein anderes geeignetes Verfahren erfolgen kann. Insbesondere im letztgenannten Fall kann der Boden auch so gestaltet sein, wie es anhand der Fig. 2 zuvor in Bezug auf den Tubenmantel 10 erläutert wurde, also insbesondere aus einem mit Sperrschicht versehenen Laminat hergestellt sein.

Die Tubenschultereinrichtung 2 ist separat vom Tubenmantel 10 hergestellt, und mit diesem Tubenmantel 10 zur Bildung eines einstückigen Teils verbunden, was durch Schweißen erfolgt.

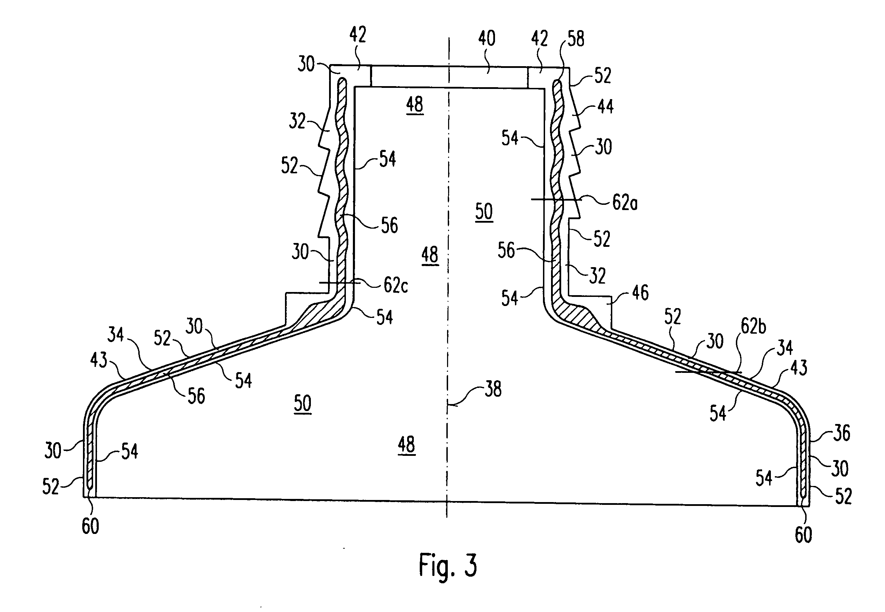

Die Tubenschultereinrichtung 2 weist eine eingespritzte Sperrschicht auf. Fig. 3 zeigt die Tubenschultereinrichtung 2, die insbesondere in dieser Gestaltung auch in der Gestaltung gemäß Fig. 1 gegeben sein kann.

Die Tubenschultereinrichtung 2 weist eine umfangsmäßig geschlossene Wand 30 auf. Diese umfangsmäßig geschlossene Wand 30 bildet einen Tubenhals 32 sowie eine Tubenschulter 34 aus.

In der Gestaltung gemäß Fig. 3 ist ferner vorgesehen, dass die umfangsmäßig geschlossene Wand 30, ferner einen sich an die Tubenschulter 34 anschließenden Ansatz 36 für den bzw. des Tubenmantels ausbildet. Dieser Ansatz 36 ist beispielsweise hohlzylindrisch ausgebildet. Die Höhe dieses Ansatzes 36 ist vorzugsweise geringer als 50 %, besonders bevorzugt geringer als 30 %, besonders bevorzugt geringer als 20%, besonders bevorzugt geringer als 15% der in axialer Richtung gemessenen Höhe der Tubenschultereinrichtung 2. Die Längsachse der Tubenschultereinrichtung 2, in dessen Richtung die Höhe hier gemessen ist, ist mit dem Bezugszeichen 38 versehen.

An dem der Tubenschulter 34 abgewandten axialen Ende bzw. der dort gelegenen Stirnseite ist im Tubenhals 32 eine Öffnung 40 für die Ausgabe von Medium vorgesehen. In diesem Ausführungsbeispiel ist vorgesehen, dass an dem angesprochenen Ende des Tubenhalses 32 eine sich radial nach innen erstreckende Ringscheibe 42 gebildet wird, in der die Öffnung 40 vorgesehen ist. Grob im Bereich 43 der Tubenschulter 34 kann beispielsweise ein Ansatz bzw. ein Absatz ausgebildet sein, der umlaufend ist und hier nicht dargestellt ist.

Der Tubenhals 32 bildet auf seiner Außenoberfläche ein Gewinde 44 aus, das beispielsweise ein metrisches Gewinde sein kann, wie metrisches ISO-Gewinde, oder ein Sonder-Sägegewinde. Am der Tubenschulter 34 zugewandten Ende des Tubenhalses 32 wird eine Art Ringwulst 46 ausgebildet, die von dem Tubenhals 32 vorsteht. Die umfangsmäßig geschlossene Wand 30 der Tubenschultereinrichtung 2 ist so gestaltet, dass sie einen Durchgangskanal 48 ausbildet. Der Durchgangskanal 48 bzw. der außerhalb der Öffnung 40 gelegene Bereich des Durchgangskanals 48 ist bei einer Tube mit einer in Fig. 3 dargestellten Tubenschultereinrichtung 2 Bestandteil des Innenraums 50 der Tube, wobei dieser Innenraum 50 zur Aufnahme eines Produktes, wie Zahnpasta, Lebensmittelprodukt oder Produkte für die Kosmetik oder Schönheitspflege oder für Arzneimittelprodukte dient.

Das Gewinde 44 dient der Aufnahme eines Schraubdeckels, mittels welchem die Tube 1 verschlossen werden kann.

Die Tubenschultereinrichtung 2 ist im Sandwich-Spritzgußverfahren hergestellt. Sie ist eine aus zwei Komponenten bestehende Tubenschultereinrichtung 2. Die radial außen gelegene Oberfläche 52 der umfangsmäßig geschlossenen Wand 30 wird vollständig von zweitem Material bzw. Kunststoffmaterial gebildet, und zwar insbesondere von Polyethylen (PE). Auch die radial innen gelegene Oberfläche 54 der umfangsmäßig geschlossenen Wand 30 wird vollständig von diesem zweiten Material bzw. Kunststoff, insbesondere Polyethylen (PE), gebildet. Hier ist es sogar so, dass sämtliche Oberflächen der Tubenschultereinrichtung 2 von diesem zweiten Material bzw. diesem Kunststoff, insbesondere Polyethylen (PE), gebildet werden.

In dieses zweite Material, bzw. Kunststoff, bzw. Polyethylen (PE), ist eine Sperrschicht 56 eingespritzt, die aus einem geeigneten Sperrmaterial, wie beispielsweise EVOH besteht.

Die Sperrschicht 56 ist umfangsmäßig geschlossen ausgebildet und erstreckt sich nahezu über die gesamte axiale Richtung der Tubenschultereinrichtung. Am axial oben gelegenen Ende 58 der Sperrschicht 56 sowie am axial unten gelegenen Ende 60 dieser Sperrschicht 56 grenzt allerdings ebenfalls zweites Material, also insbesondere Polyethylen, an diese Sperrschicht.

In Axialrichtung folgt die Sperrschicht 56 - wie Fig. 3 zeigt - im Wesentlichen dem Wandverlauf der umfangsmäßig geschlossenen Wand 30.

Die Sperrschicht 56 bzw. die umfangsmäßig geschlossene Wand 30 ist vorzugsweise so ausgebildet, dass im Wesentlichen jede - bezogen auf die umfangsmäßig geschlossene Wand 30 - radial verlaufende, gedachte Strecke, die zwischen der Innenoberfläche 54 und der Außenoberfläche 52 der umfangsmäßig geschlossenen Wand 30 durch die Sperrschicht 56 verläuft, diese Sperrschicht 56 im Wesentlichen genau einmal schneidet. Drei beispielhafte derartige radial verlaufende Strecken sind in Fig. 3 mit den Bezugszeichen 62a, 62b und 62c versehen.

In vorteilhafter Ausgestaltung ist die in Fig. 3 gezeigte Tubenschultereinrichtung gemäß einem erfindungsgemäßen Verfahren hergestellt, und zwar beispielsweise mit einem erfindungsgemäßen Verfahren, das anhand der Fig. 4a bis 4d erläutert werden wird.

Auch die in Fig. 1 gezeigte erfindungsgemäße Tube 1 ist vorzugsweise mit einem erfindungsgemäßen Verfahren hergestellt.

Anhand der Fig. 4a bis 4d soll nun ein beispielhaftes erfindungsgemäßes Verfahren zur Herstellung einer mit einer Sperrschicht 56 versehenen Tubenschultereinrichtung 2 erläutert werden.

Das beispielhafte erfindungsgemäße Verfahren lässt sich in vier Phasen einteilen. Ein schematisches Bild zur ersten Phase ist in Fig. 4a gezeigt; ein schematisches Bild zu der zweiten Phase ist in Fig. 4b gezeigt; ein schematisches Bild zur dritten Phase ist in Fig. 4c gezeigt und ein schematisches Bild zur vierten Phase ist in Fig. 4d gezeigt.

Dargestellt ist in diesem Fig. 4a bis 4d jeweils ein Spritzkopf 70 einer Spritzmaschine sowie eine Spritzgussform 72. Die Spritzgussform 72 bildet eine Innenkontur aus, die die Form einer Tubenschultereinrichtung 2 bzw. eines Negativprofils der Tubenschultereinrichtung 2 aufweist. Dies kann beispielsweise das Negativprofil einer Tubenschultereinrichtung 2 gemäß Fig. 3 sein. In den Fig. 4a bis 4d die Form einer Tubenschultereinrichtung 2 nicht zu erkennen, da anhand dieser Fig. 4a bis 4d das Verfahren zur Herstellung einer Tubenschultereinrichtung 2 prinzipiell erläutert werden soll, und zur vereinfachten Darstellung die Innenkontur dort schematisch als Rechteck dargestellt anstelle als Negativprofil einer Tubenschultereinrichtung 2.

Der Spritzkopf 70 weist eine erste Nadel 76 sowie eine zweite Nadel 74 auf. Diese Nadeln 74, 76 können auch als Düse bezeichnet werden, bzw. solche sein. Die Nadeln 74 und 76 können jeweils geöffnet und geschlossen werden. Sie sind konzentrisch zueinander angeordnet.

Über die erste Nadel 76 kann eine erstes Material bzw. Sperrschichtmaterial ausgegeben werden, und zwar insbesondere EVOH, und über die zweite Nadel 74 kann ein zweites Material, insbesondere Kunststoff, insbesondere Polyethylen (PE), ausgegeben werden. Das erste Material ist hier dunkel dargestellt und mit dem Bezugszeichen 78 versehen; das zweite Material ist hier gepunktet dargestellt und mit dem Bezugszeichen 80 versehen. Das erste Material 78 ist ein Sperrmaterial, wie beispielsweise Ethylenvinylalkohol (EVOH).

In der ersten Phase (vgl. Fig. 4a) wird die zweite Nadel, mittels welcher das zweite Material ausgegeben werden kann, geöffnet, und es wird eine erste Teilmasse der Randschicht bzw. des zweiten Materials 80, insbesondere Polyethylen (PE), eingespritzt.

In der zweiten Phase (vgl. Fig. 4b) wird die zweite Nadel 74 geschlossen und die erste Nadel 76 geöffnet. Dann wird die Kernkomponente bzw. das erste Material bzw. Sperrmaterial 78, insbesondere Ethylenvinylalkohol (EVOH), eingespritzt. Dies erfolgt insbesondere so, dass sich im zweiten Material bzw. in der Randschicht eine Sperrschicht aus erstem Material, insbesondere aus Ethylenvinylalkohol (EVOH), ausbildet.

In der dritten Phase (vgl. Fig. 4c) wird die erste Nadel 76 geschlossen und die zweite Nadel 74 wieder geöffnet. Dann wird eine zweite Teilmasse der Rand-Schicht bzw. des zweiten Materials 80, insbesondere Polyethylen (PE), eingespritzt, das gepunktet dargestellt ist.

In der vierten Phase (vgl. Fig. 4d) werden die Nadeln 74, 76 geschlossen. Wie die Figuren verdeutlichen, kann auf diese Art und Weise eine Sperrschicht ausgebildet werden, die aus dem ersten Material bzw. Sperrmaterial 78, insbesondere Ethylenvinylalkohol (EVOH), besteht.

### Bezugszeichen

- 1: Tube
- 2: Tubenschultereinrichtung
- 10: Tubenmantel
- 12: umfangsmäßig geschlossene Wand von 10 bzw. 12
- 14: Sperrschicht von 10
- 16a: Haftvermittlerschicht von 10
- 16b: Haftvermittlerschicht von 10
- 18a: Schicht von 10 aus Kunststoff bzw. Polyethylen (PE)
- 18b: Schicht von 10 aus Kunststoff bzw. Polyethylen (PE)
- 20: Boden von 1
- 30: umfangsmäßig geschlossene Wand von 2
- 32: Tubenhals von 30 bzw. 2
- 34: Tubenschulter von 30 bzw. 2
- 36: Ansatz für 10
- 38: Längsachse von 2 bzw. 30
- 40: Öffnung in 32
- 42: Ringscheibe von 2 bzw. 30
- 43: Bereich von 34
- 44: Außengewinde an 32
- 46: Ringwulst
- 48: Durchgangskanal in 2 bzw. 30
- 50: Innenraum von 1
- 52: radial außen gelegene Oberfläche von 2 bzw. 30
- 54: radial innen gelegene Oberfläche von 2 bzw. 30
- 56: Sperrschicht von bzw. in 2 bzw. 30
- 58: axial oben gelegenes Ende von 56
- 60: axial unten gelegenes Ende von 56
- 62a: Strecke
- 62b: Strecke
- 62c: Strecke
- 70: Spritzkopf
- 72: Spritzgussform
- 74: zweite Nadel von 70
- 76: erste Nadel von 70
- 78: erstes Material bzw. Sperrmaterial bzw. Ethylenvinylalkohol (EVOH)
- 80: zweites Material bzw. Polyethylen (PE)

## Patentansprüche

1. Verfahren zur Herstellung einer mit einer Sperrschicht (56) versehenen Tube umfassend die folgenden Schritte:
- Bereitstellen einer Spritzgussform (72),
- Einspritzen eines zweiten Materials (80), insbesondere Polyethylen (PE), in diese Spritzgussform (72),
- anschließendes Einspritzen des ersten Materials (78), insbesondere Ethylenvinylalkohol (EVOH), in diese Spritzgussform (72) zur Ausbildung der Sperrschicht (56) derart, dass sich innerhalb des zweiten Materials (80), oder in der Randschicht, die Sperrschicht (56) aus diesem ersten Material (78) ausbildet, und
- anschließendes erneutes Einspritzen des zweiten Materials (80) in die Spritzgussform (72),
- Verschweißen der so hergestellten Tubenschultereinrichtung mit einem Tubenmantel, wobei
zum Einspritzen des zweiten Materials (80) und des ersten Materials (78) jeweils ein und derselbe Spritzkopf (70) einer Spritzmaschine auf die Spritzgussform (72) aufgebracht wird, wobei dieser Spritzkopf (70) zur wahlweisen Ausgabe des ersten (78) und zweiten Materials (80) eine verschließbare erste Nadel (76) aufweist, aus welcher das erste Material (78) ausgegeben wird, und eine verschließbare zweite Nadel (74), aus welcher das zweite Material (80) ausgegeben wird.

2. Verfahren zur Herstellung einer mit einer Sperrschicht (56) versehenen Tube gemäß Anspruch 1,
**dadurch gekennzeichnet, dass**
für das Einspritzen des zweiten Materials (80) bei geschlossener erster Nadel (76) die zweite Nadel (74) geöffnet wird, und dass für das Einspritzen des ersten Materials (78) die zweite Nadel (74) geschlossen wird und die erste Nadel (76) geöffnet wird.

3. Verfahren zur Herstellung einer mit einer Sperrschicht (56) versehenen Tube gemäß Anspruch 2,
**dadurch gekennzeichnet, dass**
die Steuerung des Einspritzvorgangs des ersten (78) und des zweiten (80) Materials mit zwei konzentrisch zueinander angeordneten Nadeln (74, 76) erfolgt, die jeweils geöffnet und geschlossen werden können.

## Claims

1. Process to produce a tube with a sealing layer (56) including the following steps:
- providing a die casting mold (72),
- injecting a second material (80), polyethylene (PE) in particular, into this die casting mold (72),
- subsequent injecting of the first material (78), ethylene vinyl alcohol (EVA) in particular, into this die casting mold (72) to constitute the sealing layer (56) such that the blocking layer (56) forms from this first material (78) inside of the second material (80) or in the boundary layer, and
- subsequent and anew injecting of the second material (80) into this die casting mold (72),
- fusing of the tube-shoulder-device (2) fabricated in this manner with a tube-shell, wherein
the one and the same extruder head (70) of an extruder is applied to the die casting mold (72) for injecting the second material (80) and the first material (78), wherein this extruder head (70) has a lockable first needle (78), from which the first material (78) is dispensed, and has a lockable second needle (74), from which the second material (80) is dispensed, to selectively dispense the first (78) and the second material (80).

2. Process to produce a tube provided with a sealing layer (56) according to claim 1,
**characterised in**
**that** the second needle (74) is opened to inject the second material (80) while the first needle (76) is closed,
and **that** the second needle (74) is closed and the first needle (76) is opened to inject the second material (80).

3. Process to produce a tube-shoulder-device (2) provided with a sealing layer (56) according to claim 2,
**characterised in**
**that** the operation to inject the first (78) and the second (80) material is controlled by two needles (74, 76) in concentric arrangement, each of which can be opened and closed.

## Revendications

1. Procédé pour la fabrication d'un tube doté d'une couche-barrière (56), comprenant les étapes suivantes :
- préparation d'un moule de coulée par injection (72),
- injection d'un second matériau (80), en particulier du polyéthylène (PE), dans ce moule de coulée par injection (72),
- injection consécutive du premier matériau (78) en particulier éthylène-vinyle-alcool (EVOH) dans ce moule de coulée par injection (72) pour réaliser la couche-barrière (56) de telle façon que la couche-barrière (56) se forme à partir de ce premier matériau (78) au sein du second matériau (80), ou dans la couche de bordure, et
- nouvelle injection consécutive du second matériau (80) dans le moule de coulée par injection (72),
- soudage du tube ainsi fabriqué avec une enveloppe de tube,
dans lequel
pour injecter le second matériau (80) et le premier matériau (78) on amène à chaque fois une seule et même tête d'injection (70) d'une machine d'injection vers le moule de coulée par injection (72), cette tête d'injection (70) présentant, pour la distribution sélective du premier matériau (78) et du second matériau (80), une première aiguille d'obturation (76) hors de laquelle le premier matériau (78) est distribué, et une seconde aiguille d'obturation (74) hors de laquelle le second matériau (80) est distribué.

2. Procédé pour la fabrication d'un tube doté d'une couche-barrière (56) selon la revendication 1,
**caractérisé en ce que**, pour l'injection du second matériau (80) lorsque la première aiguille est fermée (76), la seconde aiguille (74) est ouverte, et **en ce que** pour l'injection du premier matériau (78) la seconde aiguille (74) est fermée et la première aiguille (76) est ouverte.

3. Procédé pour la fabrication d'un tube doté d'une couche-barrière (56) selon la revendication 2,
**caractérisé en ce que** la commande du processus d'injection du premier matériau (78) et du second matériau (80) a lieu avec deux aiguilles (74, 76) agencées concentriquement l'une par rapport à l'autre, qui peuvent être respectivement ouverte et fermée.
